Europäisches Patentamt

European Patent Office

Office européen des brevets

(11) Veröffentlichungsnummer: **0 372 398**
**A2**

# (12) EUROPÄISCHE PATENTANMELDUNG

(21) Anmeldenummer: 89122122.8

(22) Anmeldetag: 30.11.89

(51) Int. Cl.5: **F16M 13/02, F16M 11/04,**
**A47B 19/00**

(30) Priorität: 05.12.88 DE 3840893

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: Steinhilber, Helmut
**Sonnenbergstrasse 40**
**CH-6052 Hergiswil(CH)**

(72) Erfinder: Steinhilber, Helmut
**Sonnenbergstrasse 40**
**CH-6052 Hergiswil(CH)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen-Schwenningen(DE)**

(54) Stehpult.

(57) Ein an einem Schreibtisch (14) befestigbares
Stehpult weist eine vertikale Tragsäule (10) auf, an
welcher horizontal schwenkbar ein Tragarm (16) angebracht ist, der an seinem freien Ende eine Pultplatte (40) trägt. Der Tragarm (16) besteht aus zwei
gegeneinander verschwenkbaren Armgliedern (50).
Die Pultplatte (40) ist mittels eines vertikalen Stützrohres (38) schwenkbar. Durch eine einzige Betätigungseinrichtung (56, 66) können sämtliche drehbaren Verbindungen arretiert und gelöst werden.

Fig. 1

## Stehpult

Die Erfindung betrifft ein an einem Schreibtisch befestigbares Stehpult gemäß dem Oberbegriff des Anspruches 1.

Eine länger dauernde sitzende Tätigkeit an einem Schreibtisch wird von vielen Menschan als unangenehm empfunden und führt oft sogar zu gesundheitlichen Beeinträchtigungen. Es ist daher vorteilhaft, wenn die sitzende Tätigkeit zeitweise durch eine stehende Tätigkeit an einem Stehpult unterbrochen werden kann. Hierzu ist es notwendig, daß sich das Stehpult in unmittelbarer Nähe des Schreibtisches befindet, so daß die auf dem Schreibtisch liegenden Arbeitsunterlagen auch bei der Tätigkeit am Stehpult in Reichweite sind. Ein neben dem Schreibtisch aufgestelltes Stehpult ist jedoch platzraubend und aufwendig.

Aus der DE-PS 36 42 672 ist es bekannt, unter der Schreib tischplatte ein Stehpult anzuordnen, das bei Bedarf unter der Schreibtischplatte herausgezogen und in die Betriebsstellung hochgeschwenkt werden kann. Die Anordnung des Stehpults unter der Schreibtischplatte ist nicht bei allen Schreibtischkonstruktionen problemlos möglich. Außerdem kann das Herausziehen und Hochschwenken des Stehtpultes von manchem Benutzer ebenfalls noch als ein lästiger Handgriff empfunden werden.

Aus dem DE-GM 87 16 686 ist es bekannt, an einem Schreibtisch eine vertikale Tragsäule zu befestigen, an welcher schwenkbar ein horizontaler Tragarm angeordnet ist, der aus zwei gelenkig miteinander verbundenen Armgliedern besteht. Der Tragarm ist höhenverstellbar an der Tragsäule angebracht. An dem freien Ende des Tragarmes ist eine Platte angeordnet, die ein Bildschirmgerät trägt. Durch das Verschwenken des Tragarmes, das Abwinkeln der Armglieder gegeneinander und die Höhenverstellung des Tragarmes kann eine an dem Schreibtisch arbeitende Person das Bildschirmgerät in die für die Benutzung jeweils günstigste Position bringen. Diese bekannte Vorrichtung eignet sich nicht als Stehpult. Würde nämlich anstelle der das Bildschirmgerät tragenden Platte die Pultplatte eines Stehpultes angebracht, so würde der bei Benutzung des Stehpultes auf diese Pultplatte von dem Benutzer ausgeübte Druck zu einem unerwünschten Verschwenken des Tragarmes führen.

Aus der EP-PS 38 068 ist es bekannt, an einer vertikalen Tragsäule einen horizontal verschwenkbaren Tragarm anzubringen, an dessen freiem Ende um eine vertikale Achse drehbar eine Tragplatte für ein Bildschirmgerät angeordnet ist. Der Tragarm ist einstückig ausgebildet, so daß die an seinem Ende angebrachte Platte nur auf einem Kreisbogen mit festem Radius um die Tragsäule verschwenkt werden kann. Der Tragarm kann in seiner Winkelstellung in bezug auf die Tragsäule festgestellt werden. Hierzu ist in der Drehachse eine Schraube angeordnet, die den Tragarm und die Tragsäule über eine Tellerfeder miteinander verspannt. In gleicher Weise kann die Platte am freien Ende des Tragarmes in ihrer Drehstellung festgestellt werden. Die Feststellungen des Tragarmes an der Tragsäule und der Platte an dem Tragarm sind so eingestellt, daß die Reibungskraft der Tellerfeder eine Schwergängigkeit bewirkt. Ein Lösen der Feststellung ist nur mittels eines Werkzeuges, z.B. eines Schraubendrehers, möglich. Die Feststelleinrichtungen an der Tragsäule und der Platte müssen jeweils gesondert gelöst und festgezogen werden. Auch diese Vorrichtung eignet sich nicht für ein Stehpult, da die Benutzung als Stehpult eine vollständige Arretierung der Pultplatte notwendig macht. Zum Verstellen der Position der Pultplatte müßten daher die Feststelleinrichtungen jeweils gesondert in mühsamer Weise gelöst und nach der Verstellung wieder festgezogen werden.

Der Erfindung liegt die Aufgabe zugrunde, ein Stehpult der eingangs genannten Gattung zu schaffen, das in jeder gewünschten Stellung der Pultplatte mit einem einfachen Handgriff zuverlässig arretiert werden kann, wobei die Arretierung für eine Bewegung der Pultplatte in ebenso einfacher Weise lösbar ist.

Diese Aufgabe wird bei einem Stehpult der eingangs genannten Gattung erfindungsgemäß gelöst durch die Merkmale des kennzeichnenden Teiles des Anspruches 1.

Vorteilhafte Ausführungsformen der Erfindung sind in den Unteransprüchen angegeben.

Das erfindungsgemäße Stehpult wird mit seiner Tragsäule am Schreibtisch befestigt, wozu die Tragsäule vorzugsweise mit einer Tischklemme ausgestattet ist, so daß das Stehpult an der Schreibtischplatte festgeklemmt werden kann. Die Pultplatte wird von einem Tragarm getragen, der radial von der Tragsäule absteht. Der Tragarm ist horizontal verschwenkbar und weist mehrere Armglieder auf, die gegeneinander bewegbar sind, so daß die Pultplatte in einem großen Bewegungsbereich in bezug auf die Schreibtischplatte bewegt werden kann. In jeder Bewegungslage der Pultplatte ist der Tragarm feststellbar. Der Benutzer kann also die Pultplatte in die gewünschte Arbeitsposition bringen und den Tragarm in dieser Position mit einem einzigen Handgriff feststellen. Bei festgestelltem Tragarm ist ein Arbeiten an dem Stehpult möglich, ohne daß die Pultplatte unter dem Druck ausweicht, den der Benutzer bei der Arbeit auf die Pultplatte ausübt. Stört die Pultplatte bei der Arbeit am Schreibtisch oder soll sie in eine andere Arbeitsposition gebracht werden, so muß nur die Feststellung des Tragarmes gelöst werden, wozu wiederum nur ein einziger Handgriff nötig ist, und die Pultplatte kann wieder frei bewegt werden.

Die Armglieder des Tragarmes sind gelenkig miteinander verbunden, so daß sie jeweils um eine vertikale Schwenkachse gegeneinander verschwenkt werden können. Zum Feststellen der die Armglieder verbindenden Gelenke dient vorzugsweise ein Gewindespannteil, das mittels eines Handgriffes verdrehbar ist, um die Armglieder reibschlüssig gegeneinander zu verspannen. Damit die Bedienung des Stehpultes einfach ist, sind die Feststelleinrichtungen so ausgebildet, daß mittels eines einzigen Handgriffes sämtliche Feststelleinrichtungen gemeinsam betätigt werden. In einer vorteilhaf ten Ausführungsform wird ein Gewindespannteil an dem die beiden Armglieder verbindenden Gelenk mittels eines Handgriffes betätigt und über in den Armgliedern angeordnete Schubstangen werden Feststelleinrichtungen betätigt, die einerseits den Tragarm an der Tragsäule und andererseits das die Pultplatte tragende Stützrohr gegen Verdrehung arretieren.

Besteht der Tragarm nur aus einem einzigen Armglied, so ist die Pultplatte nur auf einem festen Radius in bezug auf die Tragsäule schwenkbar. Dies ist für manche Anwendungsfälle bereits ausreichend. Um Pultplatte und Tragarm in der gewünschten Arbeitsstellung feststellen zu können, ist vorzugsweise die Feststelleinrichtung der Pultplatte mit dem Handgriff versehen und wirkt über eine Schubstange auf die an der Tragsäule vorgesehene Feststelleinrichtung. Der Benutzer kann die Pultplatte in die gewünschte Arbeitsposition holen und unmittelbar an der Pultplatte das gesamte Stehpult arretieren.

Selbstverständlich ist auch eine Höhenverstellung der Pultplatte möglich. Hierzu kann entweder der Tragarm höhenverstellbar an der Tragsäule gelagert sein oder die Pultplatte ist mittels eines vertikalen Stützrohres höhenverstellbar am freien Ende des Tragarmes gelagert. Selbstverständlich können auch beide Höhenverstellungen gemeinsam vorgesehen sein. Schließlich kann erforderlichenfalls die Pultplatte auch in ihrem Neigungswinkel verstellbar sein.

Im folgenden wird die Erfindung anhand eines in der Zeichnung dargestellten Ausführungsbeispieles näher erläutert. Es zeigen :

Figur 1 eine Seitenansicht des Stehpultes in einer ersten Ausführungsform,

Figur 2 die Feststelleinrichtung dieses Stehpultes,

Figur 3 einen Schnitt gemäß der Linie III-III in Figur 1,

Figur 4 ein vergrößertes Detail der Figur 3 und

Figur 5 einen Schnitt gemäß der Linie V-V in Figur 1.

Das Stehpult weist eine aus einem zylindrischen Rohr bestehende Tragsäule 10 auf, die an ihrem unteren Ende mit einer Tischklemme 12 versehen ist. Das Stehpult läßt sich auf diese Weise an der Tischplatte 14 eines Schreibtisches befestigen.

Auf der vertikal nach oben ragenden Tragsäule 10 sitzt ein horizontal abstehender Tragarm 16. Der Tragarm 16 umschließt mit einem hülsenförmigen Ende 18 die Tragsäule 10, so daß der Tragarm 16 in der horizontalen Ebene um die Achse der Tragsäule 10 verschwenkbar ist. Auf der Tragsäule 10 sitzt ein Stellring 20, der in der Höhe verstellbar mittels wenigstens einer Schraube 22 an der Tragsäule festklemmbar ist. Um den Tragarm 16 in seiner Höhe zu verändern, wird die Schraube 22 gelöst und der Stellring in der gewünschten neuen Lage wieder fixiert.

Der Tragarm 16 besteht aus zwei Armgliedern 50. Das eine Armglied 50 weist das hülsenförmige Ende 18 auf, mit dem der Tragarm auf der Tragsäule 10 sitzt.

An dem freien Ende des anderen Armgliedes 50 ist eine Hülse 36 mit vertikaler Achse angeformt, in welcher drehbar und axial gleitend ein Stützrohr 38 geführt ist. Das Stützrohr 38 trägt an seinem oberen Ende eine geneigte Pultplatte 40, wobei gegebenenfalls der Neigungswinkel der Pultplatte 40 feststellbar verändert werden kann. Auf dem Stützrohr 38 ist oberhalb der Hülse 36 ein Stellring 42 angeordnet, der axial verschiebbar ist und mittels wenigstens einer Schraube 44 fixiert werden kann. Der Stellring 42 sitzt axial auf der Hülse 36 auf.

Die beiden Armglieder 50 sind gelenkig miteinander verbunden, so daß sie um eine vertikale Achse gegeneinander verschwenkt werden können. Hierzu weist das an der Tragsäule angeordnete Armglied 50 an seinem freien Ende einen vertikal nach oben ragenden hohlzylindrischen Stutzen 52 auf. Dieser Stutzen 52 greift von unten in das Ende des anderen Armgliedes 50 ein. Wie in Figur 3 zu sehen ist, ist an diesem Ende die Seitenwand des Armgliedes 50 abgerundet ausgebildet, so daß die Wandung des äußeren Armgliedes 50 und der Stutzen 52 ein zylindrisches Schwenkgelenk mit vertikaler Achse bilden. In dieser Achse des Schwenkgelenkes ist eine Spindel 54 angeordnet, die gleitend durch die Oberseite des äußeren Armgliedes 50 hindurchgeführt ist. An dem oben aus dem oberen Armglied herausragenden Spindelende sitzt ein Handgriff 56, mit dessen Hilfe die Spindel 54 gedreht werden kann. Die Spindel 54 führt frei durch die beiden Armglieder 50 und greift mit ihrem unteren mit einem Gewinde 58 versehenen Ende in eine Gewindebohrung in der Bodenseite des inneren an der Tragsäule angebrachten Armgliedes 50. Durch Drehen des Handgriffes 56 wird somit die Spindel 54 mittels des Gewindes 58 axial bewegt.

Im Inneren des äußeren Armgliedes 50 sitzt unterhalb von dessen Oberseite ein Stellring 60 auf der Spindel 54, der mittels einer Schraube axial auf der Spindel 54 festgelegt werden kann. Der Stellring 60 drückt von oben auf eine Tellerfeder 62, die konzentrisch zu der Spindel 54 angeordnet ist und mit ihrem äußeren Rand auf einer Innenschulter des Stutzens 52 aufsitzt. Innen an der Oberseite des Armgliedes ausgebildete Nasen 64 greifen in die Tellerfeder 62 ein und halten diese zwar axial beweglich, jedoch drehfest gegenüber dem äußeren, die Pultplatte 40 tragenden Armglied 50. Wird die Spindel 54 mittels des Handgriffes 56 axial nach unten bewegt, so drückt der Stellring 60 die Tellerfeder 62 gegen den Stutzen 52, so daß die beiden Armglieder 50 durch den Reibschluß zwischen der Tellerfeder 62 und der Schulter des Stutzens 52 miteinander verspannt sind und nicht mehr gegeneinander verschwenkt werden können. Wird die Spindel 54 wieder nach oben gedreht, so wird die Tellerfeder 62 zunehmend entspannt und die Armglieder 50 können mit zunehmend geringer werdendem Widerstand gegeneinander verschwenkt werden.

Auf der Spindel 54 sind zwei sich nach oben erweiternde Kegel 66 in der Weise angeordnet, daß sich jeder dieser Kegel innerhalb eines der Armglieder 50 befindet. Mit dem Außenmantel der Kegel 66 steht jeweils eine Schubstange 68 in Berührung. Die Schubstangen 68 verlaufen jeweils im Inneren der zugehörigen Armglieder 50 über deren gesamte Länge. Wie in Figur 5 zu sehen ist, weisen die Schubstangen 68 ein Flachprofil auf und sind in Führungen 70 längsverschiebbar geführt. Die Führungen 70 werden durch zwei parallele Stege gebildet, die am Boden der Armglieder 50 ausgebildet sind. Die Armglieder 50 sind als oben offenes U-förmiges Rechteck-Profil mit den Führungen 70 im Strang preßverfahren hergestellt. Die offene Oberseite wird durch eine Abdeckung 72 geschlossen. An den von den Kegeln 66 abgewandten Enden der Schubstangen 68 sitzt jeweils ein Klemmstück. Wird die Spindel 54 mittels des Handgriffes 56 nach unten bewegt, so drücken die sich nach unten bewegenden Kegel 66 die an ihrem Außenmantel anliegenden Schubstangen 68 weg, so daß die an den Enden der Schubstangen 68 sitzenden Klemmstücke gegen die Tragsäule 10 bzw. das Stützrohr 38 gedrückt werden. Dadurch wird eine Drehbewegung des einen Armgliedes gegenüber der Tragsäule 10 und des Stützrohres 38 in dem anderen Armglied 50 verhindert. Allein durch Betätigen des Handgriffes 56 kann somit sowohl das die beiden Armglieder verbindende Gelenk arretiert werden als auch das Verschwenken des Tragarmes 16 auf der Tragsäule 10 und die Drehung der Pultplatte 40 gegenüber dem Tragarm 16. Ebenso kann diese Arretierung allein mittels des Handgriffes 56 wieder gelöst werden.

Die an den Schubstangen 68 sitzenden Klemmstücke können unterschiedliche Form haben. Insbesondere können diese reibschlüssig an der Tragsäule bzw. dem Stützrohr 38 angreifen oder auch formschlüssig in eine Umfangsriffelung oder Zahnung der Tragsäule 10 bzw. des Stützrohres 38 eingreifen.

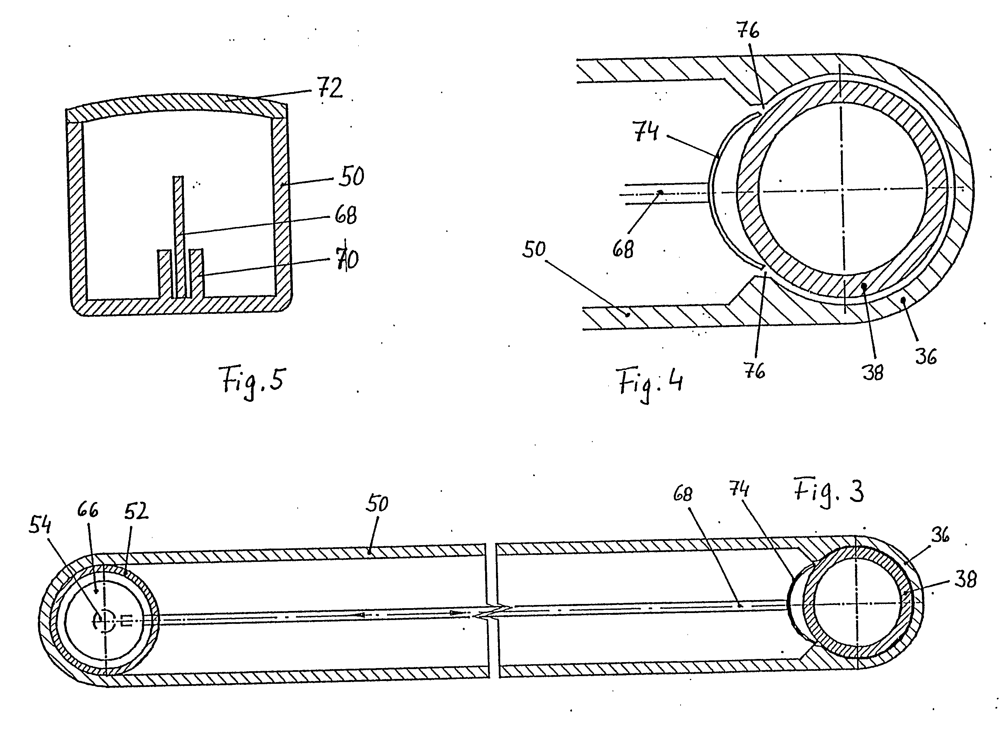

In den Figuren 3 und 4 ist eine Ausführungsform dieser Klemmstücke dargestellt. Es ist nur das Klemmstück gezeigt, das an dem Stützrohr 38 angreift. Das an der Tragsäule angreifende Klemmstück ist entsprechend ausgebildet. Das Klemmstück besteht in dieser Ausführungsform aus einem gebogenen Federblatt 74, dessen Biegungsachse parallel zur Achse des Stützrohres 38 verläuft. Die achsparallelen Ränder des Federblattes 74 sind gegen den Umfang des Stütz rohres 38 gerichtet. Die in Figur 4 übertrieben als Spalt gezeigte Berührungsfläche zwischen dem Außenumfang des Stützrohres 38 und der am Armglied 50 ausgebildeten Hülse 36 erweitert sich im Bereich der Öffnung zum Innenraum des Armgliedes 50 trichterförmig, wie in Figur 4 mit 76 gekennzeichnet ist. In diese trichterförmige Erweiterung 76 weisen die achsparallelen Kanten des Federblattes 74.

Wird die Schubstange 68 durch den Kegel 66 nach außen geschoben, so drückt sie das Federblatt 74 gegen das Stützrohr 38. Die achsparallelen Kanten des Federblattes 74 werden dadurch in die trichterförmigen Erweiterungen 76 gedrückt und verkeilen sich somit zwischen dem Stützrohr 38 und der Hülse 36 des Armgliedes. Bei einer Drehung der Pultplatte 40 wird die Keilwirkung und damit die Klemmwirkung je nach Drehrichtung auf eine der beiden Seiten verstärkt. Es ergibt sich somit eine stabile Klemmung des Stützrohres 38 in dem Armglied 50. Die Klemmwirkung kann gegebenenfalls noch durch eine Feinriffelung der miteinander in Berührung kommenden Flächen verstärkt werden.

Werden die Kegel 66 wieder nach oben bewegt, so drückt sich das Federblatt 74 aufgrund seiner Elastizität wieder von dem Stützrohr 38 ab und gelangt wieder in die in Figur 4 gezeigte Stellung, in welcher die Klemmwirkung aufgehoben ist. Erforderlichenfalls, insbesondere bei anderer Ausbildung des Klemmstückes, kann zusätzlich an der Schubstange 68 eine Rückstellfeder angreifen, die die Schubstange 68 zwangsweise in Berührung mit dem Kegel 66 hält.

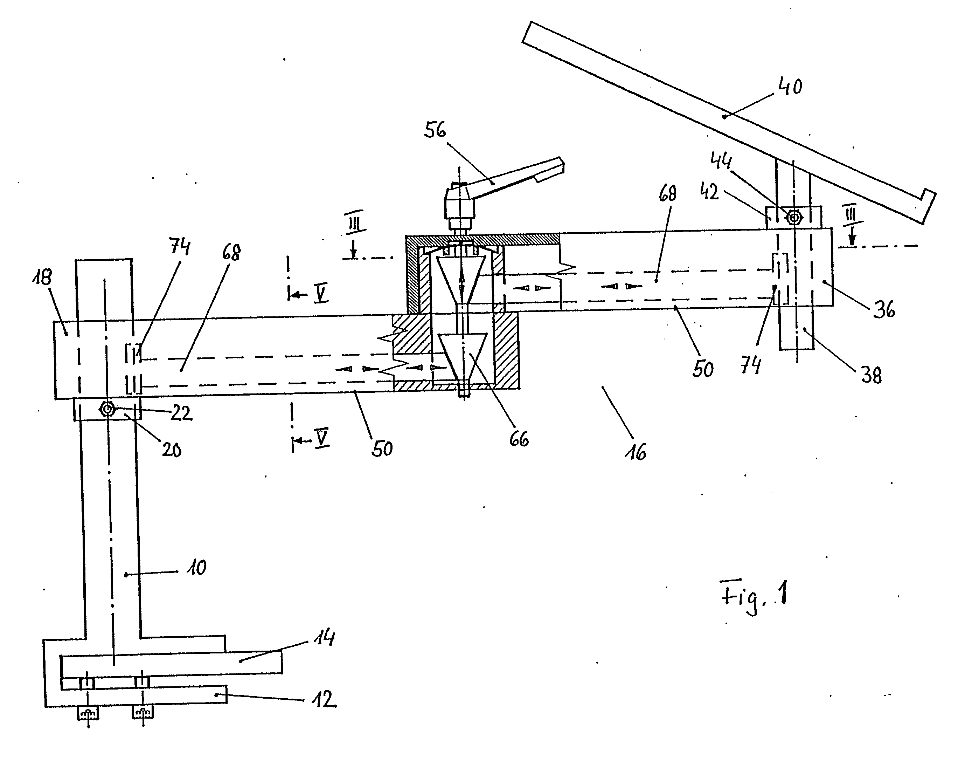

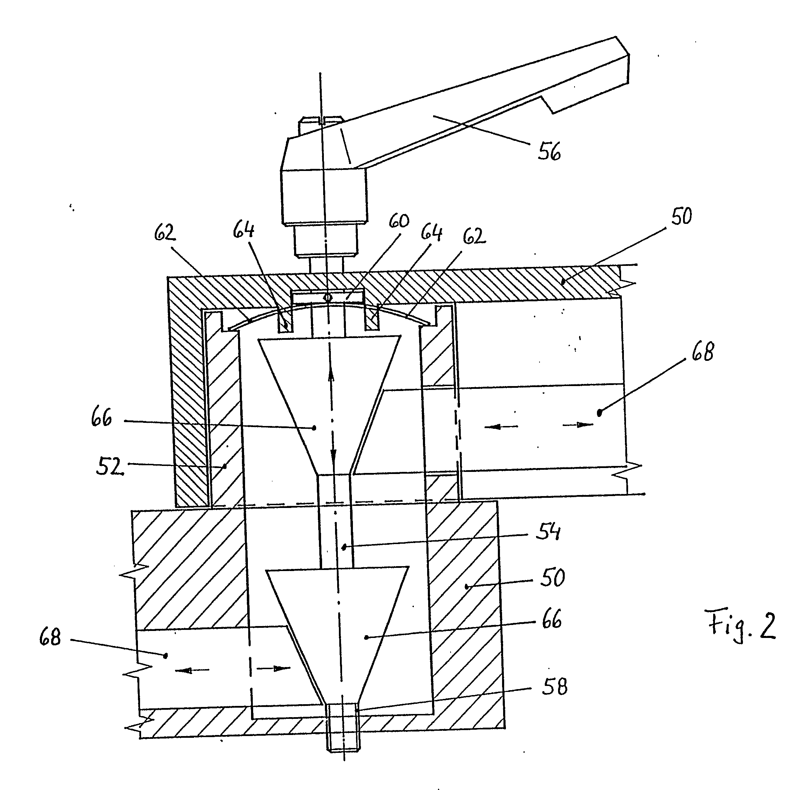

In einer vereinfachten Ausführungsform besteht der Tragarm nur aus einem einzigen Armglied, das einerseits schwenkbar auf der Tragsäule 10 sitzt und das andererseits an seinem freien Ende das Stützrohr 38 der Pultplatte 40 drehbar lagert. In dieser Ausführungsform kann die Feststelleinrichtung für die Pultplatte 40 analog zu der in Figur 2 gezeigten Feststelleinrichtung ausgebildet sein. Die Spindel 54 ist koaxial in dem Stützrohr 38 angeordnet und mittels des Gewindes 58 in dem Armglied des Tragarmes 16 durch Verdrehen axial verschiebbar. Eine an dem Armglied drehfest gelagerte Tellerfeder 62 wird mittels der Spindel 54 gegen das Stützrohr 38 gedrückt, um dieses unter Reibschluß festzustellen. Auf der Spindel 54 sitzt ein Kegel 66, der über eine Schubstange 68 ein Klemmstück verschiebt, welches an der Tragsäule 10 angreift. Weitere konstruktive Einzelheiten ergeben sich für den Fachmann ohne weiteres aus einem Vergleich mit dem Ausführungsbeispiel gemäß den Figuren 1 bis 5. Der Handgriff 56 ist am unteren Ende der Spindel angeordnet, so daß er sich unterhalb der Pultplatte 40 befindet und für den Benutzer leicht zugänglich ist, ohne diesen zu stören.

**Ansprüche**

1. Stehpult mit einer an einem Schreibtisch (14) befestigbaren vertikalen Tragsäule (10), mit einem horizontal von der Tragsäule (10) abstehenden Tragarm (16), der aus wenigstens zwei mittels einer gelenkigen Verbindung in der horizontalen Ebene gegeneinander verschwenkbaren Armgliedern (50) besteht und mit einem dieser Armglieder (50) schwenkbar an der Tragsäule (10) gelagert ist, und mit einer an dem freien Ende des Tragarmes (16) angebrachten Pultplatte (40), dadurch gekennzeichnet, daß das an der Tragsäule (10) gelagerte Armglied (50) des Tragarmes (16) durch eine lösbare Feststelleinrichtung an der Tragsäule (10) feststellbar ist, daß die Armglieder (50) durch eine lösbare Feststelleinrichtung in jeder gegenseitigen Winkelstellung feststellbar sind und daß die Feststelleinrichtung der gelenkigen Verbindung der Armglieder (50) gemeinsam mit der Feststelleinrichtung des einen Armgliedes (50) an der Tragsäule (10) betätigbar ist.

2. Stehpult nach Anspruch 1, dadurch gekennzeichnet, daß die Pultplatte (40) von einem vertikalen Stützrohr (38) getragen ist, das drehbar und feststellbar an dem Tragarm (16) gelagert ist.

3. Stehpult nach Anspruch 1 und 2, dadurch gekennzeichnet, daß das Stützrohr (38) der Pultplatte (40) an einem der gelenkig miteinander verbundenen Armglieder (50) drehbar und feststellbar gelagert ist und daß die Feststelleinrichtung der gelenkigen Verbindung der Armglieder (50) mit der Feststelleinrichtung des Stützrohres (38) gemeinsam betätigbar sind.

4. Stehpult nach wenigstens einem der Ansprüche 1 bis 3, dadurch gekennzeichnet, daß wenigstens eine der Feststelleinrichtungen ein Gewindespannteil aufweist, das mittels eines Handgriffes verdrehbar und zur Erzeugung einer kraftschlüssigen Feststellung axial bewegbar ist.

5. Stehpult nach Anspruch 4, dadurch gekennzeichnet, daß bei der Feststelleinrichtung der gelenkigen Verbindung der zwei Armglieder (50) das Gewindespannteil als Spindel (54) ausgebildet ist, die die beiden Armglieder (50) in deren vertikaler Schwenkachse durchsetzt, mit einem Gewinde (58) in eine Gewindebohrung des ersten Armgliedes (50) eingreift und mit einem Bund (Stellring 60) ein in dem zweiten Armglied (50) unverdrehbar aber in Spindelrichtung bewegbar gelagertes Federspannelement (Tellerfeder 62) in Reibschluß gegen das erste Armglied (50) drückt.

6. Stehpult nach Anspruch 5 und wenigstens einem der Ansprüche 1 und 3, dadurch gekennzeichnet, daß die Feststelleinrichtung an der Tragsäule (10) und/oder an dem Stützrohr (38) ein radial gegen die Tragsäule (10) bzw. das Stützrohr (38) bewegbares Klemmstück (Federblatt 74) aufweist und daß jedes Klemmstück (Federblatt 74) an einer in dem zugehörigen Armglied (50) geführten Schubstange (68) sitzt, deren dem Klemmstück (Federblatt 74) entgegengesetztes Ende jeweils mit der Mantelfläche eines zugehörigen auf der Spindel (54) sitzenden Kegels (66) in Berührung steht.

7. Stehpult nach wenigstens einem der vorhergehenden Ansprüche, dadurch gekennzeichnet, daß der Tragarm (16) höhenverstellbar an der Tragsäule (10) angebracht ist.

8. Stehpult nach wenigstens einem der vorhergehenden Ansprüche, dadurch gekennzeichnet, daß die Pultplatte (40) höhenverstellbar an dem Tragarm (16) angebracht ist.

9. Stehpult nach wenigstens dem Anspruch 7, dadurch gekennzeichnet, daß an der Tragsäule (10) ein Stellring (20) festklemmbar ist, der den Tragarm (16) auf der Tragsäule (10) abstützt.

10. Stehpult nach wenigstens dem Anspruch 8, dadurch gekennzeichnet, daß an dem Stützrohr (38) ein Stellring (42) festklemmbar ist, mit dem sich das Stützrohr (38) auf dem Tragarm (16) abstützt.

11. Stehpult mit einer an einem Schreibtisch (14) befestigbaren vertikalen Tragsäule (10), mit einem horizontal von der Tragsäule (10) abstehenden Tragarm (16), der schwenkbar an der Tragsäule (10) gelagert ist, und mit einer an dem freien Ende des Tragarmes (16) mittels eines vertikalen Stützrohres (38) drehbar gelagerten Pultplatte (40), dadurch gekennzeichnet, daß der Tragarm (16) durch eine lösbare Feststelleinrichtung an der Tragsäule (10) feststellbar ist, daß das die Pultplatte (40) tragende vertikale Stützrohr (38) durch eine lösbare Feststelleinrichtung in dem Tragarm (16) feststellbar ist und daß die Feststelleinrichtung an der Tragsäule (10) gemeinsam mit der Feststelleinrichtung des Stützrohres (38) betätigbar ist.

12. Stehpult nach wenigstens einem der vorhergehenden Ansprüche, dadurch gekennzeichnet, daß die Tragsäule (10) eine Tischklemme (12) zur Befestigung an der Tischplatte (14) des Schreibtisches aufweist.

Fig. 1

EP 0 372 398 A2

Fig. 2

EP 0 372 398 A2

Fig.5

Fig.4

Fig.3

EP 0 372 398 A2